# FASCICULE DE BREVET EUROPEEN

(11) **EP 2 143 620 B1**
(45) Date de publication et mention de la délivrance du brevet: **13.04.2011**
(21) Numéro de dépôt: 09162218.3
(22) Date de dépôt: 08.06.2009
(51) Int. Cl.: B62D 21/15, B62D 25/20

(54) **Dispositif de renfort d'une traverse d'assise avant de véhicule.**
Verstärkungsvorrichtung mit Querträgerstruktur für einen Frontsitzbereich des Fahrzeugs
Strengthening device with cross member structure for a front seat area in the vehicle

(30) Priorité: 08.07.2008 FR 0854628
(43) Date de publication de la demande: 13.01.2010
(73) Titulaire: PEUGEOT CITROËN AUTOMOBILES S.A., 78140 Vélizy Villacoublay (FR)
(72) Inventeur: Cornière, Eric, 78640, NEAUPHLE LE CHATEAU (FR)
(74) Mandataire: Fernandez, Francis Lionel

(56) Documents cités:
- EP-A- 1 840 005
- FR-A- 2 896 735

## Description

La présente invention concerne un dispositif de renfort d'une traverse d'assise avant de véhicule, en particulier de véhicule automobile. Elle concerne également un procédé de montage d'un tel dispositif de renfort sur une traverse d'assise avant. Elle concerne enfin un véhicule équipé d'une traverse d'assise avant ainsi renforcée.

Le soubassement d'un véhicule automobile comprend le plancher avant qui se prolonge depuis son raccordement avec le tablier jusqu'à une zone située sensiblement sous la première rangée d'assise. Ce plancher avant est surplombé d'une traverse d'assise dans sa partie arrière, située sensiblement sous la première rangée d'assise. Une telle traverse d'assise, qui vient fixer et maintenir le siège avant, a un rôle fondamental en cas de choc latéral sur le véhicule, en contribuant à la rigidité de la structure et à l'absorption du choc. En effet, en cas de choc latéral sur le véhicule, une partie des efforts résultant du choc transite par le soubassement du véhicule : une voie d'effort se situe notamment dans la traverse d'assise avant du véhicule.

On connaît déjà différentes configurations de plancher de véhicule comportant une traverse d'assise avec des moyens de renfort.

A titre d'exemple, le document FR 2 896 735 décrit une traverse d'assise de véhicule automobile qui comporte une poutre fixée entre deux longerons du véhicule ou entre un longeron et un tunnel de transmission. Cette traverse comporte également des organes de renfort fixés à la poutre et aptes à transmettre au soubassement du véhicule un effort appliqué sur une extrémité latérale de la poutre.

Suivant l'exposé du document EP1840005 il est connu un dispositif de renfort d'une traverse d'assise avant de véhicule, en particulier de véhicule automobile, fixée entre un longeron et un tunnel central du véhicule, constitué par une sur-traverse, rigide, qui vient coiffer la traverse sensiblement sur la longueur de ladite traverse, de façon à venir renforcer cette dernière lors d' un choc latéral sur le véhicule.

Le but principal de la présente invention est de fournir un dispositif de renfort de la traverse d'assise avant d'un véhicule, en particulier d'un véhicule automobile, qui permette, en cas de choc latéral, de transmettre efficacement les efforts résultant du choc à l'ensemble du soubassement du véhicule et de protéger les passagers du véhicule.

Un autre but de la présente invention est de fournir un tel dispositif de renfort, qui soit de conception simple et d'assemblage aisé, et qui soit économique.

C'est également un but de la présente invention de fournir un procédé de montage d'un tel dispositif de renfort sur une traverse d'assise avant de véhicule, qui soit de mise en oeuvre simple, et qui soit économique, notamment en permettant un assemblage final en temps masqués.

Enfin, c'est également un but de la présente invention de fournir un véhicule, en particulier un véhicule automobile, qui offre une meilleure sécurité des passagers en cas de choc latéral.

Pour parvenir à ces buts, la présente invention a pour objet un dispositif de renfort d'une traverse d'assise avant de véhicule, en particulier de véhicule automobile, fixée entre un longeron et un tunnel central du véhicule, caractérisé en ce qu'il est constitué par une sur-traverse, rigide, qui vient coiffer la traverse sensiblement sur la longueur de ladite traverse, de façon à venir renforcer cette dernière lors d'un choc latéral sur le véhicule, la traverse d'assise étant une poutre de section sensiblement en « U » à partie ouverte tournée vers le bas, et la sur-traverse étant également une poutre de section sensiblement en « U » à partie ouverte tournée vers le bas, la sur-traverse venant coiffer la traverse.

Ledit tunnel central de véhicule peut être un tunnel de transmission ou bien un tunnel d'échappement.

La traverse d'assise et la sur-traverse sont, de préférence, des pièces en tôle embouties avec dépouilles, par conséquent qui s'élargissent dans leur partie ouverte.

Selon le mode préféré de réalisation de l'invention également, la traverse et la sur-traverse présentent toutes les deux une section en « U » à flancs non parallèles, mais s'écartant légèrement de la base vers la partie ouverte de la section en « U ».

De préférence, mais de façon non limitative de l'objet et de la portée de la présente invention, la sur-traverse est fixée sur la traverse au moyen d'inserts gonflants.

De manière préférentielle, les inserts gonflants sont collés sur la sur-traverse, laquelle sert, par conséquent, de pièce support aux inserts gonflants.

Les inserts gonflants sont, de préférence, situés sur les faces internes de l'un et l'autre des deux flancs de la sur-traverse.

De préférence, il est prévu un moyen de positionnement de la sur-traverse en position avant liaison complète par les inserts gonflants, de façon à éviter que la sur-traverse s'échappe de sa position.

Ce moyen de positionnement peut être un pion, ou tout moyen connu équivalent.

Selon un mode avantageux de réalisation de l'invention, la sur-traverse est prise en « sandwich » entre la traverse et la fixation extérieure avant du siège.

La présente invention a également pour objet un procédé de montage d'un dispositif de renfort à inserts gonflants conforme à celui décrit ci-dessus dans ses grandes lignes. Selon ce nouveau procédé, la sur-traverse est chargée en zone dite « MEF » de montage des éléments et finition, puis la sur-traverse est maintenue en position jusqu'à la cuisson peinture, au cours de laquelle il y a expansion des matières gonflantes des inserts gonflants, de façon à permettre la solidarisation de la sur-traverse avec la traverse.

La présente invention a enfin pour objet un véhicule, en particulier un véhicule automobile, dans lequel chaque traverse d'assise avant du véhicule est renforcée au moyen d'un dispositif de renfort conforme à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, le principe du dispositif de renfort d'une traverse d'assise avant de véhicule automobile, selon la présente invention,
- la figure 2 est une section de dispositif de renfort - ou sur-traverse - en place sur une traverse d'assise avant de véhicule,
- la figure 3 est une vue en perspective d'un exemple de réalisation du dispositif de renfort, selon la présente invention,
- la figure 4 représente les effets de la présence du dispositif de renfort sur le soubassement du véhicule, en cas de choc latéral, et
- la figure 5 est une graphique représentatif des vitesses de déplacement en Y de différents modes de réalisation de traverses renforcées et montrant les avantages de la présence du dispositif de renfort de l'invention, en cas de chocs latéraux sur le véhicule.

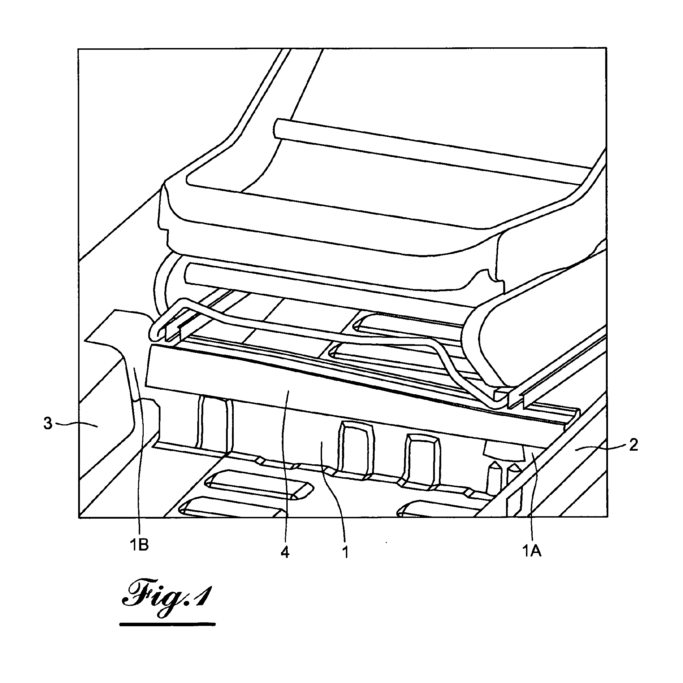

En référence au dessin de la figure 1, une traverse d'assise 1 de passager avant est fixée par des moyens appropriés connus, non représentés sur les figures, sur un longeron avant 2 du véhicule et un tunnel central du véhicule, de référence 3, qui peut être un tunnel de transmission ou bien, de façon plus courante, un tunnel d'échappement.

La traverse d'assise 1 peut être située sensiblement dans le voisinage ou à l'aplomb d'un pied central de côté d'habitacle.

La traverse d'assise 1 présente la forme d'une poutre métallique de section en « U » inversé, ouverte vers le bas, dont les extrémités latérales 1A et 1B sont reliées respectivement au longeron 2 et au tunnel 3, par soudage ou par tout moyen de liaison équivalent connu en soi.

La traverse d'assise 1 est coiffée sur sa longueur par une sur-traverse de renforcement, de référence 4, qui présente également la forme d'une poutre de section également en « U » inversé.

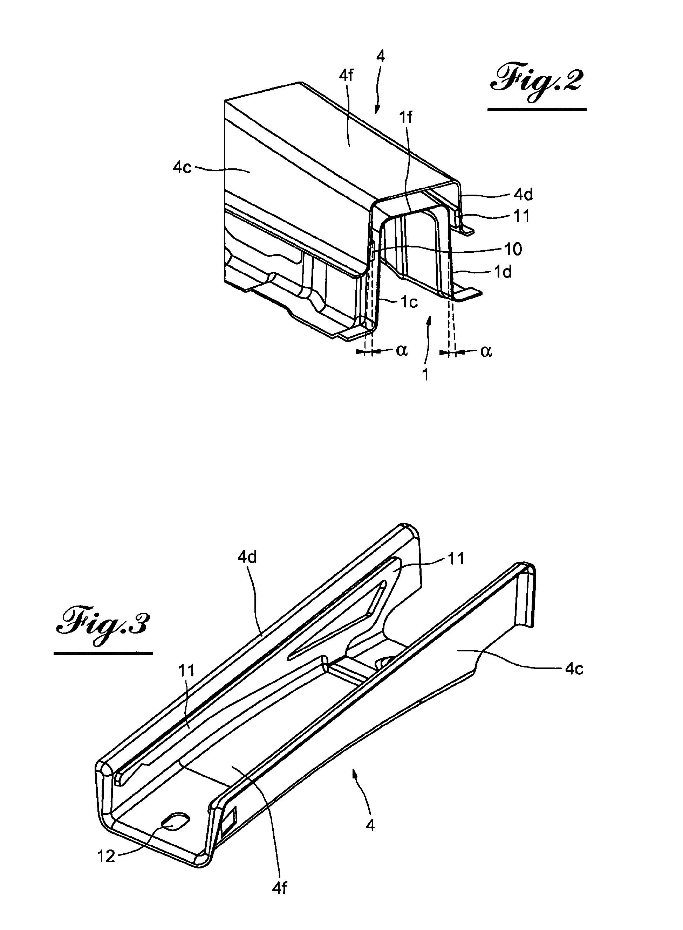

L'arrangement de la sur-traverse 4 sur la traverse d'assise avant 1 est mieux représenté sur le dessin de la figure 2.

La traverse d'assise 1 est formée de flancs latéraux 1c et 1d, et d'une paroi supérieure 1f. La sur-traverse 4 est, de façon similaire, formée de flancs latéraux 4c et 4d, et d'une paroi supérieure 4f.

Les flancs latéraux 1c et 1d de la traverse d'assise 1 ne sont pas perpendiculaires à la paroi supérieure 1f, mais légèrement inclinés d'un angle α de la paroi supérieure 1f vers la partie ouverte de la section en « U ». De la même façon, les flancs latéraux 4c et 4d de la sur-traverse 4 ne sont pas perpendiculaires à la paroi supérieure 4f, mais légèrement inclinés d'un angle sensiblement égal α de la paroi supérieure 4f vers la partie ouverte de la section en « U » de la sur-traverse 4. Les inclinaisons des flancs latéraux 1c, 1d de la traverse d'assise 1 et l'inclinaison de flancs latéraux 4c, 4d, respectivement, de la sur-traverse 4 sont sensiblement identiques, de façon à permettre un « coiffage » par concordance de formes de la sur-traverse 4 sur la traverse d'assise 1.

La sur-traverse 4 est fixée sur la traverse d'assise 1 au moyen d'inserts gonflants, désignés 10 et 11, positionnés sur les faces intérieures des flancs latéraux 4c et 4d, respectivement, de la sur-traverse 4. Un insert gonflant 11 est mieux représenté sur la figure 3.

De manière générale, les inserts gonflants sont des solutions d'étanchéité, par exemple, connues en soi, et largement utilisées dans le domaine de la fabrication automobile. Ils sont produits en plaques, découpés à la demande, puis collés sur les pièces dites « de support ». Leurs applications sont destinées notamment aux cavités dans les montants, les traverses de toit et les longerons. La matière avant expansion est estampée ou injectée, puis éventuellement assemblée à un support de type nylon, métal ou autre. Les inserts gonflants de type « race track » ou « sandwich » sont fixés à l'aide de clips ou soudés dans la caisse en blanc. Durant la phase de cataphorèse, la matière expansive des inserts gonfle sous l'effet de la chaleur produite par le four. Les inserts gonflants utilisés pour la sur-traverse 4 de la présente invention sont des inserts de type structuraux. Ce sont des inserts qui fonctionnent de la même façon que les inserts gonflants d'étanchéité, mais n'ont pas de fonction d'étanchéité à l'eau. Ils peuvent présenter une qualité acoustique en limitant la résonance et les bruits de caisse. Cette limitation est due principalement au fait que les inserts permettent d'éviter les micro déplacements entre les tôles lors des sollicitations de caisse du type torsion de caisse ou les sollicitations créées par des conditions de route dégradées.

Les inserts gonflants 10, 11 de l'exemple de réalisation de l'invention sont collés sur la sur-traverse 4, laquelle sert, par conséquent, de pièce support aux inserts gonflants 10, 11.

Durant leur expansion et leur cuisson, les inserts gonflants adhèrent à la traverse 1. De plus, les inserts étant situés en entretoises entre la traverse 1 et la sur-traverse 4, leur gonflement génère une sorte de pincement de la sur-traverse 4 sur la traverse 1.

De manière préférentielle, il est prévu un moyen de positionnement de la sur-traverse 4 en position avant liaison complète par les inserts gonflants 10, 11, de façon à éviter que la sur-traverse 4 s'échappe de sa position.

Ce moyen de positionnement peut être un pion de maintien ou un moyen analogue, non représenté sur les figures, qui relie deux orifices en regard de la sur-traverse 4 et de la traverse d'assise 1. L'orifice de la sur-traverse pour le passage du pion de centrage peut être l'orifice 12 représenté sur la figure 3, qui représente un exemple de configuration de la sur-traverse 4 et des inserts gonflants, représentés par l'insert gonflant 11 sur le flanc latéral 4d.

Comme on peut le voir sur le dessin de la figure 1, la sur-traverse 4 est prise en « sandwich » entre la traverse d'assise 1 et la fixation extérieure avant du siège.

Le procédé de montage de la sur-traverse 4 sur la traverse d'assise 1 est le suivant :
- la sur-traverse 4 est chargée en zone dite « MEF » de montage des éléments et finition,
- la sur-traverse 4 est ensuite maintenue en position jusqu'à la cuisson peinture, au cours de laquelle il y a expansion des matières gonflantes des inserts gonflants 10 et 11, de façon à permettre la solidarisation de la sur-traverse 4 avec la traverse d'assise avant 1.

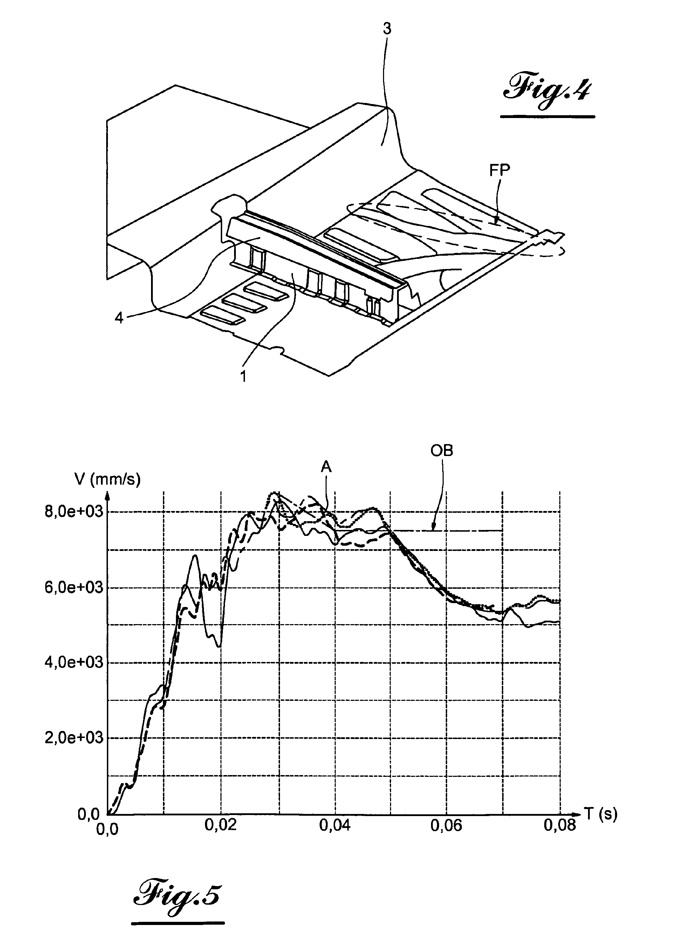

Sur la figure 4, on a représenté, de manière schématique, les effets de la présence du dispositif de renfort sur le soubassement du véhicule, en cas de choc latéral : la présence de la sur-traverse 4 provoque un décalage de la formation du pli dans le sens transversal, lequel décalage est représenté dans la zone désignée FP sur la figure 4.

La figure 5 est une graphique représentatif des vitesses de déplacement, en millimètres par seconde, selon l'axe en Y du véhicule pour différents modes de réalisation de traverses renforcées et montrant les avantages de la présence du dispositif de renfort de l'invention, en cas de chocs latéraux sur le véhicule. Les calculs effectués avec le mode de réalisation du renfort de traverse selon la présente invention sont illustrés par la courbe A, tandis que les autres courbes sont représentatives des calculs effectués avec d'autres types de renforcement de la traverse, comme par exemple un renfort de type console, et suivant les évolutions d'épaisseurs de traverse liées aux campagnes d'allègement ou d'optimalisation des pièces principales dans différents projets. On peut noter l'apport important de la sur-traverse selon l'invention sur les vitesses d'intrusion entre 40 et 50 millisecondes permettant d'atteindre les objectifs figurés par la courbe OB en traits interrompus mixtes.

L'invention décrite ci-dessus présente de nombreux avantages, parmi lesquels les avantages suivantes :
- elle permet, grâce notamment à la liaison de la sur-traverse sur les flans latéraux de la traverse, d'augmenter fortement l'inertie et, par conséquent, la prestation de la traverse d'assise au choc latéral,
- elle permet, en cas de choc latéral, à la traverse d'assise de garder plus longtemps sa géométrie générale et, de surcroît, d'absorber plus d'énergie plus longtemps,

- elle n'entraîne pas de surcoût, même si elle est mise en oeuvre seulement sur certains modèles de véhicules d'une même plateforme,
- elle n'entraîne pas de surcoût du fait également que le chargement de la sur-traverse est simple, et que son assemblage final est réalisé en temps masqués.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre invention des revendications.

## Revendications

1. Dispositif de renfort d'une traverse d'assise avant (1) de véhicule automobile fixée entre un longeron et un tunnel central du véhicule, constitué par une sur-traverse (4), rigide, qui vient coiffer la traverse d'assise (1) sensiblement sur la longueur de ladite traverse (1), de façon à venir renforcer cette dernière lors d'un choc latéral sur le véhicule, **caractérisé en ce que** ladite traverse d'assise (1) est une poutre de section sensiblement en « U » à partie ouverte tournée vers le bas et ladite sur-traverse (4) est également une poutre de section sensiblement en « U » à partie ouverte tournée vers le bas.

2. Dispositif de renfort selon la revendication 1, **caractérisé en ce que** la traverse d'assise (1) et la sur-traverse (4) présentent toutes les deux une section en « U » à flancs latéraux (1c, 1d, 4c, 4d) non parallèles, mais s'écartant légèrement de la base vers la partie ouverte de la section en « U ».

3. Dispositif de renfort selon la revendication 2, **caractérisé en ce que** la sur-traverse (4) est fixée sur la traverse d'assise (1) au moyen d'inserts gonflants (10, 11).

4. Dispositif de renfort selon la revendication 3, **caractérisé en ce que** lesdits inserts gonflants (10, 11) sont collés sur la sur-traverse (4), laquelle sert, par conséquent, de pièce support aux inserts gonflants (10, 11).

5. Dispositif de renfort selon la revendication 4, **caractérisé en ce que** les inserts gonflants (10, 11) sont situés sur les faces internes de l'un et l'autre des deux flancs latéraux (4c, 4d) de la sur-traverse (4).

6. Dispositif de renfort selon la revendication 3, **caractérisé en ce qu'**il est prévu un moyen de positionnement de la sur-traverse (4) en position avant liaison complète par les inserts gonflants (10, 11), de façon à éviter que la sur-traverse (4) s'échappe de sa position.

7. Dispositif de renfort selon la revendication 6, **caractérisé en ce que** ledit moyen de positionnement est un pion.

8. Dispositif de renfort selon l'une quelconque des revendications précédentes, **caractérisé en ce que** la sur-traverse (4) est prise en « sandwich » entre la traverse d'assise (1) et la fixation extérieure avant du siège.

9. Dispositif de renfort selon l'une quelconque des revendications précédentes, **caractérisé en ce que** ledit tunnel central du véhicule est le tunnel de transmission.

10. Dispositif de renfort selon l'une quelconque des revendications 1 à 8, **caractérisé en ce que** ledit tunnel central du véhicule est le tunnel d'échappement.

11. Procédé de montage d'un dispositif de renfort conforme à l'une quelconque des revendications 3 à 9 sur une traverse d'assise avant (1) de véhicule, en particulier de véhicule automobile, **caractérisé en ce que** la sur-traverse (4) est chargée en zone dite « MEF » de montage des éléments et finition, puis la sur-traverse (4) est maintenue en position jusqu'à la cuisson peinture, au cours de laquelle il y a expansion des matières gonflantes des inserts gonflants (10, 11), de façon à permettre la solidarisation de la sur-traverse (4) avec la traverse d'assise (1).

12. Véhicule, en particulier véhicule automobile, **caractérisé en ce que** la traverse d'assise avant (1) du véhicule est renforcée au moyen d'un dispositif de renfort conforme à l'une quelconque des revendications 1 à 10.

## Claims

1. Reinforcing device of a front seat cross member (1) of a motor vehicle, fixed between a side member and a central tunnel of the vehicle, constituted by a supra cross member (4), which is rigid, which comes to cap the seat cross member (1) substantially over the length of the said cross member (1), so as to come to reinforce the latter in the case of a lateral impact on the vehicle, **characterized in that** the said seat cross member (1) is a beam having substantially a U-section with an open part facing downwards and the said supra cross member (4) is likewise a beam having substantially a U-section with an open part facing downwards.

2. Reinforcing device according to Claim 1, **characterized in that** the seat cross member (1) and the supra cross member (4) both have a U-section with non-parallel lateral sides (1c, 1d, 4c, 4d), but diverging slightly from the base towards the open part of the U-section.

3. Reinforcing device according to Claim 2, **characterized in that** the supra cross member (4) is fixed on the seat cross member (1) by means of inflating inserts (10, 11).

4. Reinforcing device according to Claim 3, **characterized in that** the said inflating inserts (10, 11) are stuck on the supra cross member (4), which serves, as a result, as a support piece for the inflating inserts (10, 11).

5. Reinforcing device according to Claim 4, **characterized in that** the inflating inserts (10, 11) are situated on the internal faces of the one and the other of the two lateral sides (4c, 4d) of the supra cross member (4).

6. Reinforcing device according to Claim 3, **characterized in that** a means is provided for positioning the supra cross member (4) in position before complete linking by the inflating inserts (10, 11), so as to prevent the supra cross member (4) from moving away from its position.

7. Reinforcing device according to Claim 6, **characterized in that** the said positioning means is a pin.

8. Reinforcing device according to any one of the preceding claims, **characterized in that** the supra cross member (4) is "sandwiched" between the seat cross member (1) and the front exterior fixing of the seat.

9. Reinforcing device according to any one of the preceding claims, **characterized in that** the said central tunnel of the vehicle is the transmission tunnel.

10. Reinforcing device according to any one of Claims 1 to 8, **characterized in that** the said central tunnel of the vehicle is the exhaust tunnel.

11. Method for mounting a reinforcing device in accordance with any one of Claims 3 to 9 on a front seat cross member (1) of a vehicle, in particular a motor vehicle, **characterized in that** the supra cross member (4) is charged in the area designated "MEF" for the mounting of elements and finishing, then the supra cross member (4) is held in position until the paint curing, during which there is an expansion of the inflating materials of the inflating inserts (10, 11), so as to allow the unifying of the supra cross member (4) with the seat cross member (1).

12. Vehicle, in particular motor vehicle, **characterized in that** the front seat cross member (1) of the vehicle is reinforced by means of a reinforcing device in accordance with any one of Claims 1 to 10.

## Patentansprüche

1. Verstärkungsvorrichtung eines Vordersitzquerbalkens (1) für Kraftfahrzeug, der zwischen einem Längsbalken und einem zentralen Tunnel des Fahrzeugs befestigt ist, der aus einem starren Überquerbalken (4) besteht, der auf dem Sitzquerbalken (1) im Wesentlichen auf der Länge des Querbalkens (1) derart sitzt, dass er diesen Letzteren bei einem seitlichen Aufprall auf das Fahrzeug verstärkt, **dadurch gekennzeichnet, dass** der Sitzquerbalken (1) ein Balken mit einem im Wesentlichen "U"-förmigen Querschnitt mit offenem Teil nach unten gekehrt ist, und dass der Überquerbalken (4) ebenfalls ein Balken mit im Wesentlichen "U"-förmigem Querschnitt mit offenem Teil nach unten gekehrt ist.

2. Verstärkungsvorrichtung nach Anspruch 1, **dadurch gekennzeichnet, dass** der Sitzquerbalken (1) und der Überquerbalken (4) beide einen "U"-förmigen Querschnitt mit Seitenflanken (1c, 1d, 4c, 4d), die nicht parallel sind, aufweisen, die sich aber leicht von der Basis zu dem offenen Teil des "U"-förmigen Querschnitts abspreizen.

3. Verstärkungsvorrichtung nach Anspruch 2, **dadurch gekennzeichnet, dass** der Überquerbalken (4) auf dem Sitzquerbalken (1) mittels quellender Einsätze (10, 11) befestigt ist.

4. Verstärkungsvorrichtung nach Anspruch 3, **dadurch gekennzeichnet, dass** die quellenden Einsätze (10, 11) auf den Überquerbalken (4) geklebt werden, der daher als Tragteil für die quellenden Einsätze (10, 11) dient.

5. Verstärkungsvorrichtung nach Anspruch 4, **dadurch gekennzeichnet, dass** die quellenden Einsätze (10, 11) auf den Innenseiten der einen und der anderen der zwei seitlichen Flanken (4c, 4d) des Überquerbalkens (4) liegen.

6. Verstärkungsvorrichtung nach Anspruch 3, **dadurch gekennzeichnet, dass** ein Positioniermittel des Überquerbalkens (4) in vorderer kompletter Verbindungsposition durch die quellenden Einsätze (10, 11) derart vorgesehen ist, dass vermieden wird, dass der Überquerbalken (4) aus seiner Position austritt.

7. Verstärkungsvorrichtung nach Anspruch 6, **dadurch gekennzeichnet, dass** das Positioniermittel ein Stift ist.

8. Verstärkungsvorrichtung nach einem der vorhergehenden Ansprüche, **dadurch gekennzeichnet, dass** der Überquerbalken (4) zwischen dem Sitzquerbalken (1) und der vorderen Außenbefestigung des Sitzes ins "Sandwich" genommen ist.

9. Verstärkungsvorrichtung nach einem der vorhergehenden Ansprüche, **dadurch gekennzeichnet, dass** der zentrale Tunnel des Fahrzeugs der Getriebetunnel ist.

10. Verstärkungsvorrichtung nach einem der Ansprüche 1 bis 8, **dadurch gekennzeichnet, dass** der zentrale Tunnel des Fahrzeugs der Auspufftunnel ist.

11. Verfahren zur Montage einer Verstärkungsvorrichtung nach einem der Ansprüche 3 bis 9 auf einen vorderen Sitzquerbalken (1) eines Fahrzeugs, insbesondere eines Kraftfahrzeugs, **dadurch gekennzeichnet, dass** der Überquerbalken (4) in der so genannten "MEF"-Montagezone der Endfertigungselemente geladen wird, dass der Überquerbalken (4) dann bis zum Brennen des Lacks in Position gehalten wird, während welchem ein Dehnen der quellenden Materialien der quellenden Einsätze (10, 11) derart erfolgt, dass das feste Verbinden des Überquerbalkens (4) mit dem Sitzquerbalken (1) erlaubt wird.

12. Fahrzeug, insbesondere ein Kraftfahrzeug, **dadurch gekennzeichnet, dass** der vordere Sitzquerbalken (1) des Fahrzeugs mittels einer Verstärkungsvorrichtung nach einem der Ansprüche 1 bis 10 verstärkt wird.
